# EUROPÄISCHE PATENTSCHRIFT

(11) **EP 3 412 908 B1**
(45) Veröffentlichungstag und Bekanntmachung des Hinweises auf die Patenterteilung: **24.01.2024**
(21) Anmeldenummer: 17175154.8
(22) Anmeldetag: 09.06.2017
(51) Int. Cl.: F03D 7/02, F03D 7/04

(54) **WINDENERGIEANLAGE MIT SYSTEM SOWIE VERFAHREN ZUR MONTAGE UND ZUM BETREIBEN EINER WINDENERGIEANLAGE**
WIND TURBINE COMPRISING A SYSTEM AND METHOD FOR MOUNTING AND FOR OPERATING A WIND TURBINE
ÉOLIENNE AVEC SYTEME ET PROCÉDÉ DE MONTAGE ET DE FONCTIONNEMENT D'UNE ÉOLIENNE

(43) Veröffentlichungstag der Anmeldung: 12.12.2018
(73) Patentinhaber: Nordex Energy SE & Co. KG, 22419 Hamburg (DE)
(72) Erfinder: Kabatzke, Wolfgang, 21502 Geesthacht (DE); Stahl, Jasmin, 22769 Hamburg (DE)
(74) Vertreter: Epping - Hermann - Fischer

(56) Entgegenhaltungen:
- WO-A1-2016/058787
- US-A1- 2004 151 575
- US-A1- 2010 050 731
- US-A1- 2010 085 041
- US-A1- 2010 133 828
- US-A1- 2010 209 246
- US-A1- 2014 175 795
- US-A1- 2015 240 783

## Beschreibung

Die Erfindung betrifft eine Windenergieanlage, aufweisend ein System für eine Windenergieanlage, insbesondere ein System, mit dem eine Ausrichtung einer Gondel der Windenergieanlage bestimmbar ist. Die Erfindung betrifft weiterhin ein Verfahren zur Montage eines solchen Systems sowie ein Verfahren zum Betreiben einer Windenergieanlage mit einem solchen System.

Windenergieanlagen werden verwendet, um Energie des Windes in elektrische Energie umzuwandeln. Zur maximalen Ausbeute der Windenergie ist es beispielsweise erforderlich, dass die Windenergieanlage, auch Windkraftanlage genannt, immer die optimale Ausrichtung zur Windrichtung hat. Aufgrund von Umgebungseinflüssen, wie beispielsweise durch nahe gelegene Häuser oder Bäume, kann es bei bestimmten Windrichtungen zu erhöhten Turbulenzen kommen. Dafür werden beim Planen eines Windparks entsprechende Profile erstellt, sodass eine Überlastung durch Umgebungseinflüsse vermieden werden kann. Dieser sogenannte Sektorbetrieb stellt sicher, dass die Anlage für bestimmte Himmelsausrichtungen beispielsweise nur in Teillast betrieben oder vollständig abgeschaltet wird. Um gesetzlichen Auflagen an den Emissionsschutz, wie dem Lärmschutz oder dem Schutz vor störendem Schattenwurf zu genügen, ist es weiterhin bekannt, Windenergieanlagen in Abhängigkeit ihrer Ausrichtung in ihrer Drehzahl zu begrenzen oder abzuschalten. Weiterhin kann eine solche Regelung auch störende Auswirkungen auf RADAR-Systeme begrenzen.

US 2010/133828 A1 betrifft ein Verfahren zum Betreiben eines Windturbinengenerators, das das Bestimmen eines Torsionsmoments innerhalb einer Rotorwelle und / oder das Modulieren einer Gierausrichtung eines Windkraftgenerators und / oder einer Blattsteigungsausrichtung als Funktion des bestimmten Torsionsmoments umfasst.

US 2014/175795 A1 betrifft die Ausrichtung einer schwimmenden Windenergieanlage in Abhängigkeit von einer Windrichtung.

Es ist wünschenswert, ein System für eine Windenergieanlage anzugeben, das eine genaue Bestimmung der Ausrichtung der Windenergieanlage ermöglicht. Zudem ist es wünschenswert, ein Verfahren zur Montage des Systems anzugeben. Weiterhin ist es wünschenswert, ein Verfahren zum Betreiben einer Windenergieanlage anzugeben, das eine genaue Bestimmung der Ausrichtung der Windenergieanlage ermöglicht.

Die Erfindung ist durch die Ansprüche definiert, wobei Anspruch 1 eine Windkraftanlage offenbart, die ein System zum Bestimmen der optimalen Richtung der Windkraftanlage umfasst, und Anspruch 8 ein Verfahren zum Installieren eines solchen Systems offenbart.

Gemäß zumindest einer Ausführungsform weist ein System für eine Windenergieanlage zwei binäre Näherungssensoren auf. Die Näherungssensoren sind jeweils ausgebildet, ein Sensorsignal mit einer ersten oder einer zweiten Information bereitzustellen. Das System weist einen Geber auf. Das System weist eine Steuervorrichtung auf. Die Näherungssensoren und der Geber wirken berührungslos zusammen. Die Näherungssensoren sind jeweils ausgebildet, in Abhängigkeit von einem Abstand des Gebers zum jeweiligen Näherungssensor das Sensorsignal mit der ersten Information oder der zweiten Information bereitzustellen. Die Steuervorrichtung ist eingerichtet, in Abhängigkeit von den Sensorsignalen der Näherungssensoren zu ermitteln, ob sich der Geber innerhalb eines mittels der Näherungssensoren vorgegebenen Korrektursektors befindet. Die Steuervorrichtung kann besonders bevorzugt als Teil der Steuervorrichtung der Windenergieanlage ausgeführt sein. Die Steuervorrichtung ist bevorzugt in der Gondel der Windenergieanlage angeordnet.

Das System verwendet eine einfache und robuste Technik. Es werden einfache binäre Näherungssensoren verwendet. Somit ist es insbesondere möglich, auf optische Sensoren oder ähnliche Elemente zu verzichten, die im Betrieb aufgrund von Verschmutzung oder Abnutzung ungenaue Daten liefern oder ausfallen können. Aufgrund der Verwendung einfacher mechanischer Bauelemente weist das System eine hohe Lebensdauer auf. Zudem wird eine sehr geringe Ausfallwahrscheinlichkeit erreicht.

Die beiden Näherungssensoren geben beispielsweise jeweils das Signal mit der zweiten Information aus, wenn sich der Geber in der Nähe der beiden Näherungssensoren befindet. Ist der Geber außerhalb der Messfelder der Näherungssensoren, wird das Signal mit der ersten Information bereitgestellt, dass der Geber nicht einen ausreichend geringen Abstand zu den Näherungssensoren aufweist. Andere Informationen werden von den beiden Näherungssensoren nicht zur Verfügung gestellt.

Ist der Geber lediglich im Messbereich eines der Näherungssensoren angeordnet und mit einem größeren Abstand zum anderen der Näherungssensoren, stellt der eine Näherungssensor ein Sensorsignal mit der zweiten Information zur Verfügung und der andere der Näherungssensoren ein Sensorsignal mit der ersten Information. Somit ist eine Überwachung der Funktionalität der beiden Näherungssensoren möglich, wie nachfolgend noch näher erläutert wird.

Die beiden binären Näherungssensoren sind beispielsweise jeweils als Magnetfeldsensoren ausgebildet. Die Magnetfeldsensoren sind jeweils ausgebildet, magnetische Flussdichten zu messen. Bevorzugt sind die Näherungssensoren beispielsweise jeweils als induktive Sensoren ausgebildet. Die induktiven Sensoren sind jeweils ausgebildet, eine Änderung einer Induktivität zu messen. Zum Zusammenwirken mit den binären Magnetfeldsensoren ist der Geber beispielsweise aus einem magnetischen Material oder zumindest abschnittsweise magnetisch. Alternativ oder zusätzlich ist der Geber gemäß Ausführungsformen zumindest abschnittsweise elektrisch leitfähig oder aus einem elektrisch leitfähigen Material. Somit ist der Geber ausgebildet, von den binären Näherungssensoren detektiert zu werden und durch seine Detektion ein entsprechendes Sensorsignal auszulösen.

Durch die Verwendung von Binärsensoren, die in jedem Zustand ein Signal bereitstellen, wird eine einfache Überwachung der Funktionsfähigkeit des erfindungsgemäßen Systems bewirkt. Das System ist somit eigensicher ausgeführt.

Insgesamt werden also einfache und sicher überwachbare binäre Näherungssensoren verwendet. Weiterhin ist von Vorteil, dass die in dem erfindungsgemäßen System verwandten Binärsensoren zu geringen Kosten und mit sehr hohen Lebenserwartungen verfügbar sind. Geeignete Bauformen der Näherungssensoren, beispielsweise quadratische Sensoren mit zentriertem Auslösefeld und mehrfacher Schraubverbindung, führen zu einer langlebig mechanisch stabilen und im bestimmungsgemäßen Betrieb unlösbaren Verbindung.

Die Näherungssensoren sind gemäß zumindest einer Ausführungsform horizontal zueinander beabstandet angeordnet. Insbesondere sind die beiden Näherungssensoren beispielsweise an einer gemeinsamen Halterung beabstandet zueinander befestigt. Der horizontale Abstand ermöglicht im Betrieb ein Ermitteln der Ausrichtung einer Gondel der Windenergieanlage.

Gemäß zumindest einer Ausführungsform ist der Geber als eine Baugruppe ausgeführt und so länglich ausgedehnt, dass der Geber im funktionsfähigen Zustand, also beispielsweise im Betrieb, mindestens von dem einen Näherungssensor zu dem anderen Näherungssensor reicht. Wenn sich der Geber bereichsweise entlang eines Kreissegments erstreckt, ist der Mittelpunktswinkel dieses Kreissegments beispielsweise kleiner als 180°, insbesondere kleiner als 90°. Der Geber erstreckt sich somit insbesondere entlang einer direkten und kurzen Verbindungslinie zwischen den beiden Näherungssensoren, wobei die Verbindungslinie beispielsweise gekrümmt verläuft.

Somit ist es möglich, dass der Geber in einem ausreichend geringen Abstand zu den beiden Näherungssensoren gleichzeitig angeordnet werden kann, um beispielsweise das Sensorsignal mit der zweiten Information von beiden Näherungssensoren bereitzustellen. Eine Ausführung aus einer Baugruppe ermöglicht eine einfache Montage des Systems, bei welcher Geber und Sensoren optimal zueinander angeordnet sind und das Sensorsignal mit der zweiten Information sicher von beiden Sensoren bereitgestellt wird.

Gemäß der Erfindung weist eine Windenergieanlage ein anmeldungsgemäßes System nach zumindest einer Ausführungsform auf. Die Windenergieanlage weist eine länglich ausgedehnte Standvorrichtung auf. Die Windenergieanlage weist eine drehbar auf der Standvorrichtung gelagerte Gondel auf. An der Gondel ist insbesondere der Rotor gelagert, der vom Wind in Rotation versetzt werden kann und der mit einem Generator zum Umwandeln der Rotationsenergie in elektrische Energie verbunden ist. Die Gondel der Windenergieanlage ist über ein Azimutsystem drehbar mit der Standvorrichtung verbunden, wie es für horizontalachsige Windenergieanlagen bekannt ist. Das Azimutsystem weist wenigstens ein Azimutlager umfassend wenigstens einen ersten und einen zweiten Lagerring, die gegeneinander drehbar gelagert sind, und einen Azimutantrieb auf. Der erste Lagerring ist beispielsweise mit der Standvorrichtung fest verbunden. Der zweite Lagerring ist mit der Gondel oder einem in der Gondel angeordneten Maschinenträger fest verbunden.

Der Geber ist an einem aus der Gondel und der Standvorrichtung ortsfest angeordnet. Die beiden Näherungssensoren sind an dem anderen aus der Gondel und der Standvorrichtung ortsfest angeordnet. Der Geber und die beiden Näherungssensoren sind zusammen mit der Gondel und der Standvorrichtung relativ zueinander drehbar. Der Geber ist bevorzugt ortsfest an der Standvorrichtung angeordnet. Die beiden Näherungssensoren sind bevorzugt ortsfest zu der Gondel angeordnet. Mit Vorteil kann somit eine einfache drahtgebundene Signalübertragung zwischen den Sensoren und der Steuervorrichtung ermöglicht werden. Beispielsweise ist der Geber an dem ersten Lagerring des Azimutlagers angeordnet, während die beiden binären Näherungssensoren an dem zweiten Lagerring des Azimutsystems und somit mit der Gondel drehbar gegenüber dem Geber angeordnet sind.

Mittels des Systems ist es möglich die Ausrichtung der Gondel relativ zu der Standvorrichtung zu ermitteln. Es ist feststellbar, ob die Gondel so ausgerichtet ist, dass der Geber nah genug an den beiden Näherungssensoren angeordnet ist, sodass diese das Signal mit der zweiten Information bereitstellen. Somit ist feststellbar, dass sich die Gondel mit dem Geber innerhalb des vorgegebenen Korrektursensors befindet. Wenn der Geber in einem größeren Abstand von den Näherungssensoren angeordnet ist, also gegen diesen verdreht ist, ist feststellbar, dass die Gondel außerhalb des vorgegebenen Korrektursensors ausgerichtet ist. Da eine absolute Himmelsrichtung bekannt ist, korrespondierend zu der die beiden Näherungssensoren an der Standvorrichtung montiert sind, ist auch feststellbar, ob die Gondel in diese Richtung ausgerichtet ist oder nicht.

Wird im Betrieb der Windenergieanlage die Gondel gegen die Standvorrichtung gedreht, so können hierbei Fehler auftreten. Beispielsweise kann es beim Verfahren der Gondel bei hohen Windgeschwindigkeiten vorkommen, dass die Azimutantriebe nicht ausreichend Gegenmoment aufbringen können, um eine neue Sollposition wie vorgesehen anzufahren. Übersteigt das auf die Gondel bzw. den Rotor der Anlage wirkende Drehmoment das Gegenmoment der Azimutantriebe, so kann es zu Schlupf kommen. Der Umrichter, der den Azimutantrieb speist, würde in diesem Fall einen falschen Istwinkel angeben. Da die Ausrichtung immer relativ zu dem Istwinkel erfolgt, können sich solche Fehler fortsetzen und aufaddieren. Mit dem anmeldungsgemäßen System ist es möglich festzustellen, ob sich die Gondel mit ihrer Ausrichtung innerhalb des Korrektursektors befindet.

Sind Geber und Näherungssensoren in Deckung, kann also eine Korrektur des Istwerts für den Azimutwinkel der Windenergieanlage vorgenommen werden. Die beiden Näherungssensoren sind beispielsweise innerhalb des Korrektursektors an der Standvorrichtung angeordnet.

Ein Verfahren zur Montage eines Systems gemäß zumindest einer Ausführungsform an einer Windenergieanlage umfasst gemäß einer Ausführungsform ein Bereitstellen der Windenergieanlage mit einer länglich ausgedehnten Standvorrichtung und einer drehbar auf der Standvorrichtung gelagerten Gondel. Eine Himmelsrichtung an der Gondel wird ermittelt. Beispielsweise wird die Himmelsrichtung an der Gondel mittels eines GPS-Kompass ermittelt. Der Geber wird entweder an der Gondel oder der Standvorrichtung ortsfest positioniert. Die beiden Näherungssensoren werden an dem anderen aus der Gondel und der Standvorrichtung ortsfest positioniert. Der Geber ist bevorzugt ortsfest an der Standvorrichtung angeordnet. Die beiden Näherungssensoren sind bevorzugt ortsfest zu der Gondel angeordnet. Somit sind der Geber und die beiden Näherungssensoren zusammen mit der Gondel und der Standvorrichtung relativ zueinander drehbar. Die beiden Näherungssensoren werden beispielsweise ortsfest zu der Gondel positioniert, sodass die beiden Näherungssensoren zusammen mit der Gondel relativ zu der Standvorrichtung und dem Geber drehbar sind. Der Geber wird beispielsweise ortsfest an der Standvorrichtung positioniert. Ein Korrektursektor für die Ausrichtung des Gebers in Abhängigkeit von der ermittelten Himmelsrichtung und der Position der Näherungssensoren und des Gebers wird festgelegt.

Beispielsweise wird beim der Montage des Systems eine beliebige Himmelsrichtung gemessen und gespeichert. Der Geber und die Näherungssensoren werden an einer Stelle montiert, die von der gemessenen Himmelsrichtung abweicht. Zusätzlich zur gemessenen Himmelsrichtung wird dann auch noch die Abweichung des Montageortes des Gebers und der Näherungssensoren von der Himmelsrichtung gespeichert.

Gemäß Ausführungsbeispielen wird die Ausrichtung der Gondel ermittelt aus der annähernd horizontalen Rotationsachse des Rotors oder einem Drehwinkel des Azimutsystems relativ zu der ermittelten Himmelsrichtung. Beispielsweise ist die ermittelte Himmelsrichtung 145°, wobei die Nordrichtung 0° entspricht. Der Geber und die beiden Näherungssensoren werden beispielweise mit einer bekannten Abweichung von -25° zu der ermittelten Himmelsrichtung montiert. Wenn der Geber in diesem Beispiel die beiden Näherungssensoren abdeckt, ist die Ausrichtung der Gondel folglich bei 120° bezogen auf die absolute Nordrichtung.

Sind jedoch die beiden Näherungssensoren und der Geber in Deckung, kann also davon ausgegangen werden, dass die Gondel auf dem Winkel ausgerichtet ist, der beim Einmessen bezüglich Norden ermittelt wurde, gegebenenfalls unter Berücksichtigung einer ebenfalls beim Einmessen ermittelten Abweichung des Montageortes. Der Korrektursektor wird also bezüglich der absoluten Himmelsrichtungen bei der Montage der Näherungssensoren und des Geber definiert.

Aufgrund der Montage des Gebers und der Näherungssensoren in einer bekannten Position relativ zu der ermittelten Himmelsrichtung ist die Ausrichtung relativ zu der Himmelsrichtung und zu absoluten Himmelsrichtungen des Korrektursektors bekannt. Die ermittelte Himmelsrichtung wird beispielsweise in der Steuervorrichtung gespeichert, sodass im nachfolgenden Betrieb der Windenergieanlage feststellbar ist, wenn der Geber sich innerhalb des Korrektursektors befindet, in welche Himmelsrichtung die Gondel ausgerichtet ist. Bei der Montage wird einmal eine Ausrichtung der Näherungssensoren und des Gebers bestimmt. Beispielsweise werden zunächst die Näherungssensoren und der Geber an der Windenergieanlage befestigt, sodass der Geber innerhalb der Messfelder der beiden Näherungssensoren ist. Nachfolgend wird die Himmelsrichtung ermittelt, in die der Geber und die Näherungssensoren ausgerichtet sind.

Alternativ wird zunächst eine Himmelsrichtung ermittelt, beispielsweise Norden oder eine andere Himmelsrichtung, sodass der Geber und die Näherungssensoren an einer geeigneten Position in Bezug diese Himmelsrichtung montiert werden können.

Wenn der Geber und die beiden Näherungssensoren so positioniert sind, dass sie jeweils mit der ermittelten Himmelsrichtung korrespondieren, wird der Korrektursektor so festgelegt, dass der Korrektursektor die Himmelsrichtung einschließt. Insbesondere definiert die ermittelte Himmelsrichtung die Mitte des Korrektursektors. Gemäß zumindest einer Ausführungsform werden die ermittelte Himmelsrichtung und der Korrektursektor jeweils in der Steuervorrichtung gespeichert.

Gemäß zumindest einer Ausführungsform wird eine Abweichung der ermittelten Himmelsrichtung von einer vorgegebenen absoluten Himmelsrichtung ermittelt. Die vorgegebene absolute Himmelsrichtung ist beispielsweise Norden. Die ermittelte Abweichung und der Korrektursektor werden jeweils in der Steuervorrichtung für die Windenergieanlage gespeichert. Somit ist ein Umrechnen des Korrektursektors auf die absolute Himmelsrichtung möglich.

Ein Verfahren zum Betreiben einer Windenergieanlage gemäß zumindest einer Ausführungsform umfasst ein Ermitteln, ob sich der Geber in dem Korrektursektor befindet. Wenn sich der Geber in dem Korrektursektor befindet, wird ein Soll-Wert für eine Ausrichtung des Gebers in Abhängigkeit von einer gespeicherten Himmelsrichtung ermittelt. Die gespeicherte Himmelsrichtung wurde beispielsweise während der Montage des Gebers und der Näherungssensoren in der Steuervorrichtung gespeichert. Ein Wert eines Azimutpositionsgebers der Windenergieanlage wird ermittelt. Der Azimutpositionsgeber stellt beispielsweise einen Wert für die Ausrichtung der Gondel zur Verfügung. Eine Differenz zwischen dem Soll-Wert und dem ermittelten Wert wird ermittelt. Wenn die ermittelte Differenz größer als ein vorgegebener Toleranzwert ist, wird ein Korrekturwert für den Azimutpositionsgeber in Abhängigkeit von dem Soll-Wert ermittelt. Es wird davon ausgegangen, dass die Gondel verlässlich in eine bekannte Himmelsrichtung ausgerichtet ist, wenn sich der Geber in dem Korrektursektor befindet. Wenn der Wert des Azimutpositionsgebers nicht ausreichend genau mit dem Soll-Wert übereinstimmt, wird der Azimutpositionsgeber entsprechend korrigiert. Ein Fehler des Azimutpositionsgebers, beispielsweise ein Winkelversatz, kann somit ermittelt und korrigiert werden.

Insbesondere wird ermittelt, dass sich der Geber in dem Korrektursektsor befindet, wenn beide Näherungssensoren das Sensorsignal mit der zweiten Information bereitstellen, dass der Geber in der Nähe des jeweiligen Näherungssensors ist, also innerhalb des Messfeldes der beiden Näherungssensoren.

Gemäß zumindest einer Ausführungsform umfasst das Verfahren zum Betreiben der Windenergieanlage ein Drehen der Gondel relativ zur Standvorrichtung um mindestens 360°. Ein Fehlersignal wird ausgegeben, wenn während des Drehens beide Näherungssensoren nicht mindestens einmal jeweils das Sensorsignal mit der zweiten Information bereitstellen, dass der Geber in der Nähe des jeweiligen Näherungssensors ist. Somit ist eine Überprüfung der Funktionsfähigkeit der Näherungssensoren einfach und verlässlich möglich. Beispielsweise wird das Drehen der Gondel um mindestens 360° herkömmlich durchgeführt, um Kabel zu entdrillen, die die Gondel mit dem Stromnetz verbinden. Die Kontrolle der Funktionsfähigkeit der Näherungssensoren kann während einer derartigen Kabelentdrillungsfahrt durchgeführt werden.

Weitere Vorteile, Merkmale und Weiterbildungen ergeben sich aus den nachfolgenden, in Verbindung mit den Figuren erläuterten Beispielen.

Es zeigen:
Figur 1 eine schematische Darstellung einer Windenergieanlage gemäß einem Ausführungsbeispiel,
Figur 2 eine schematische Darstellung eines Systems gemäß einem Ausführungsbeispiel,
Figur 3 eine schematische Darstellung des Systems gemäß einem Ausführungsbeispiel,
Figur 4 eine schematische Darstellung des Systems gemäß einem Ausführungsbeispiel,
Figur 5 eine schematische Darstellung der Näherungssensoren gemäß einem Ausführungsbeispiel, und
Figur 6 eine schematische Darstellung einer Auswertung von Sensorsignalen gemäß einem Ausführungsbeispiel.

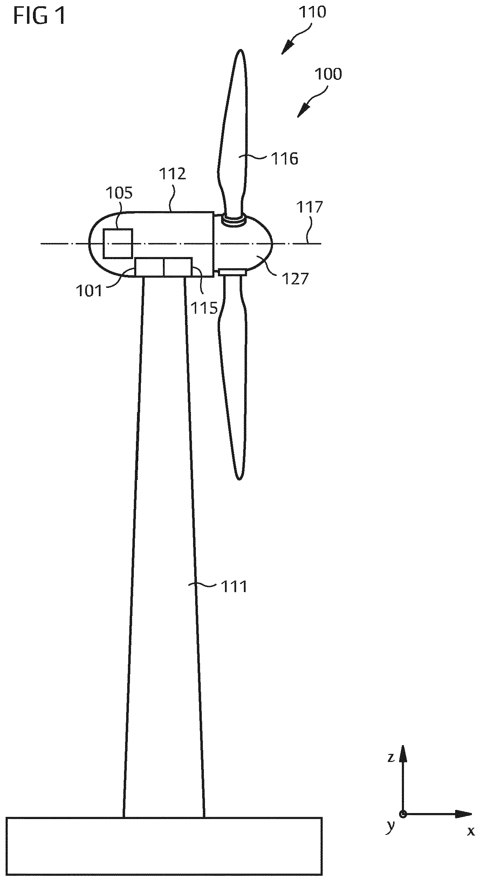

Figur 1 zeigt eine schematische Darstellung einer Windenergieanlage gemäß einem Ausführungsbeispiel. Die Windenergieanlage 100 weist eine entlang einer Z-Richtung länglich ausgedehnte Standvorrichtung 111 auf. Die Standvorrichtung ist auf einem Untergrund befestigt. Die Standvorrichtung 111 ist beispielsweise ein Turm, beispielsweise ausgeführt als Stahlrohr-, Spannbeton-, Fachwerk- oder Sandwichturm.

An einem dem Untergrund gegenüberliegenden Ende der Standvorrichtung 111 ist eine Gondel 112 angeordnet. Die Gondel ist um eine Drehachse, die gleichgerichtet zur Z-Achse ist, relativ zur Standvorrichtung 111 drehbar.

Die Gondel 112 weist beispielsweise einen Generator auf, der über eine Rotorwelle (nicht gezeigt) mit einem Rotor 110 gekoppelt ist. Der Rotor weist beispielsweise ein Rotorblatt oder mehrere Rotorblätter 116 auf, die an einer Rotornabe 127 angeordnet sind. Der Rotor 110 wird im Betrieb durch Wind in Rotation versetzt und diese Rotation über die Rotorwelle zu dem Generator übertragen, der die kinetische Energie des Rotors in elektrische Energie umwandelt.

In der Gondel 112 ist ein Azimutpositionsgeber 115 angeordnet. Der Azimutpositionsgeber ist eingerichtet, einen Wert einer Ausrichtung 117 der Gondel 112 zu ermitteln. Die Ausrichtung 117 ist insbesondere eine Himmelsrichtung innerhalb der YX-Ebene der Figur 1.

Die Gondel weist weiterhin eine Steuervorrichtung 105 auf. Die Steuervorrichtung 105 ist gemäß weiteren Ausführungsbeispielen nicht innerhalb der Gondel 112, sondern in der Standvorrichtung 111 angeordnet. Der Azimutpositionsgeber 115 und die Steuervorrichtung 105 sind signaltechnisch miteinander gekoppelt.

Die Windenergieanlage 100 weist zudem ein System 101 auf.

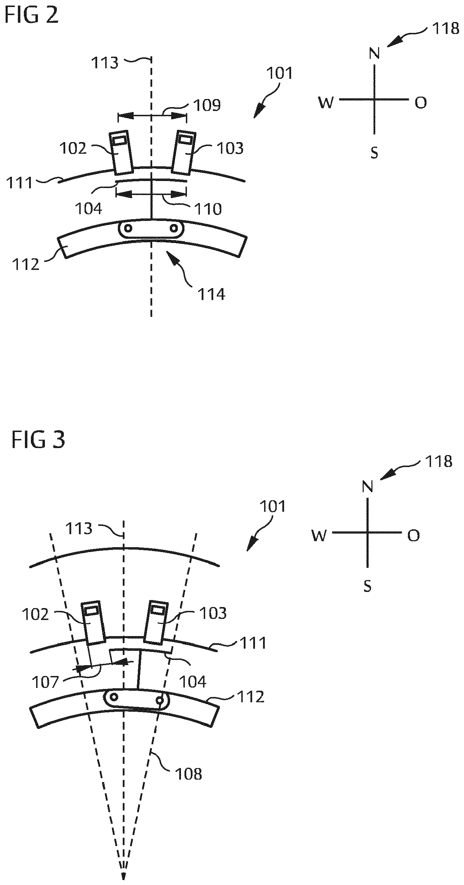

Das System 101 dient zur Ermittlung, ob die Gondel 112 innerhalb eines vorgegebenen Korrektursektors 108 (Figur 3) ausgerichtet ist oder nicht. Das System 101 und die Steuervorrichtung sind signaltechnisch ebenfalls miteinander gekoppelt.

Figur 2 zeigt schematisch das System 101 gemäß einer Ausführungsform. Das System 101 weist zwei binäre Näherungssensoren 102 und 103 auf. Das System 101 weist zudem einen Geber 104 auf.

Im betriebsfertigen Zustand sind die beiden Näherungssensoren 102 und 103 gemäß Ausführungsbeispielen mit einer nichtdrehenden Komponente der Windenergieanlage 100 verbunden, beispielsweise der Standvorrichtung 111. Der Geber 104 ist an einer drehbaren Komponente der Windenergieanlage 110 angeordnet, beispielsweise der Gondel 112.

Gemäß bevorzugten Ausführungsbeispielen (nicht gezeigt) ist der Geber 104 an der Standvorrichtung 111 ortsfest angeordnet und die Näherungssensoren 102 und 103 sind mit der Gondel 112 verbunden.

Sind die Näherungssensoren 102 und 103 beispielsweise ortsfest und mit der Standvorrichtung 111 verbunden, ist die Steuervorrichtung 105 insbesondere ebenfalls in der Standvorrichtung 111 untergebracht. Alternativ kann das Signal über einen Schleifkontakt übertragen werden. Eine drahtlose Verbindung ist ebenfalls möglich, aber vergleichsweise aufwändig.

Im Rahmen dieser Anmeldung ist es möglich, die Anordnung der Näherungssensoren 102 und 103 und des Gebers 104 jeweils an der Standvorrichtung 111 und der Gondel 112 miteinander auszutauschen. Dies wird insbesondere als technisch äquivalent angesehen. Je nach Verortung der Steuervorrichtung 105 können sich jedoch unterschiedliche Vorteile beim Herstellen der signaltechnischen Verbindung mit dem Geber 104 und/oder den Näherungssensoren 102 und 103 ergeben.

Die Näherungssensoren 102 und 103 sind jeweils binäre Sensoren. Sie registrieren folglich nur, ob sich der Geber 104 näher als ein Schwellwert an den jeweiligen Näherungssensoren 102 und 103 befindet oder nicht. Der Schwellwert gibt ein Messfeld der jeweiligen Näherungssensoren 102 und 103 vor. Der Schwellwert kann auch als Abstand bezeichnet werden. Die Näherungssensoren sind insbesondere als induktive Näherungsschalter ausgebildet. Alternativ oder zusätzlich sind die Näherungssensoren als Magnetfeldsensoren ausgebildet. Der Geber 104 ist entsprechend ausgebildet, dass er die Näherungssensoren schalten kann. Folglich weist der Geber 104 zumindest abschnittsweise ein elektrisch leitfähiges Material, beispielsweise ein Metall, auf. Um auch die Magnetfeldsensoren auslösen zu können, sind beispielsweise am Geber 104 zwei Permanentmagneten vorgesehen.

Im betriebsfertigen Zustand sind die beiden Näherungssensoren 102 und 103 in einem horizontalen Abstand 109 zueinander angeordnet. Somit ist abhängig von der Ausrichtung der Gondel 112 relativ zur Standvorrichtung 111 eine Auslösung beider Näherungssensoren 102 und 103 oder lediglich eines einzigen der Näherungssensoren 102 und 103 möglich.

Der Geber 104 weist zumindest an seiner den Näherungssensoren 102 und 103 zugewandten Seite eine längliche Ausdehnung 110 auf. Diese ist mindestens so lang ausgedehnt, dass der Geber 104 gleichzeitig in beiden Messfeldern der beiden Näherungssensoren 102 und 103 angeordnet werden kann.

Bei der Montage des Systems 101 wird eine Himmelsrichtung 113 ermittelt. Beispielsweise entspricht die Himmelsrichtung 113 einer absoluten Himmelsrichtung 118, beispielsweise Norden. Gemäß weiteren Ausführungsformen weicht die Himmelsrichtung 113 von der absoluten Himmelsrichtung 118 ab. Die Abweichung wird bei der Montage ermittelt. Die Himmelsrichtung 113 wird beispielsweise mittels eines GPS-Kompass ermittelt. Beispielsweise wird der GPS-Kompass an der Gondel 102 montiert und arretiert, dass er relativ zu der Gondel 112 nicht mehr verdrehbar ist. Die Antenne des GPS-Kompass zeigt dabei beispielsweise in Richtung Mitte der Rotornabe 127. Somit wird eine Himmelsrichtung zwischen der Drehachse der Gondel 112 und der Mitte der Rotornabe 127 ermittelt.

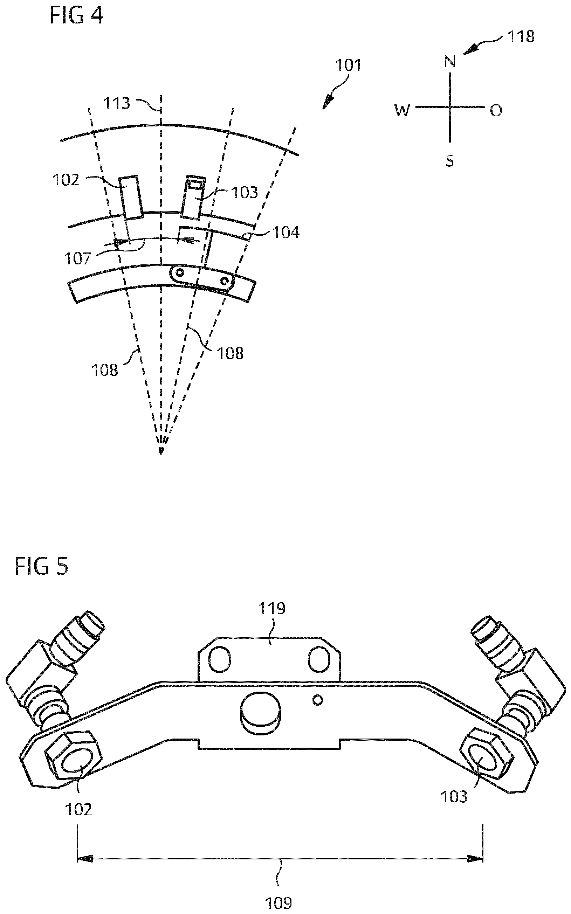

Ein Sensorhalter 119 (Figur 5) mit den beiden Näherungssensoren 102 und 103 wird an einer Position 114 montiert, die mit der Himmelsrichtung 113 korrespondiert. Insbesondere verläuft die Himmelsrichtung 113 mittig zwischen den beiden Näherungssensoren 102 und 103.

Beispielsweise wird der Halter 119 mittels Schrauben befestigt. Die Schrauben werden beispielsweise zunächst nur so weit angezogen, dass man sie einfach lösen kann, um den Sensorhalter gegebenenfalls noch leicht zu verschieben.

Der Geber 104 zur Abschattung der beiden Näherungssensoren 102 und 103 wird ebenfalls an der Position 114, die mit der Himmelsrichtung 113 korrespondiert, montiert. Insbesondere verläuft die Himmelsrichtung 113 mittig durch die längliche Ausdehnung 110. Der Geber 104 wird beispielsweise mittels Schrauben befestigt. Die Schrauben werden beispielsweise zunächst nur so fest angezogen, dass man sie so weit einfach nochmals lösen kann, um den Geber 104 in geringen Grenzen zu verschieben.

Sobald die Näherungssensoren 102 und 103 sowie der Geber 104 exakt in der Position 114 angeordnet sind, dass sie mit der Himmelsrichtung 113 des GPS-Kompass übereinstimmen, werden die Schrauben jeweils fest angezogen und arretiert. Hierbei wird darauf geachtet, dass beide Näherungssensoren 102 und 103 die Nähe des Gebers 104 ermitteln und ein entsprechendes Signal ausgeben.

In der Steuervorrichtung 105 wird dann beispielsweise die Himmelsrichtung 113 abgespeichert. Alternativ oder zusätzlich wird eine Abweichung zur absoluten Himmelsrichtung 118 abgespeichert, die die Sensoren 102 und 103 sowie der Geber 104 aufweisen.

Figur 3 zeigt das System 101 während des Betriebs der Windenergieanlage 100. Die beiden Näherungssensoren 102 und 103 geben den Korrektursektor 108 vor. Wenn der Geber 104 einen ausreichend geringen Abstand 107 zu den beiden Sensoren 102 und 103 aufweist, ist der Geber 104 innerhalb des Korrektursektors 108 angeordnet. Ist der Abstand 107 zumindest zu einem der beiden Näherungssensoren 102 und 103 größer als der Schwellwert, ist der Geber 104 außerhalb des Korrektursektors angeordnet, wie in Figur 4 dargestellt. Hier ist der Abstand des Gebers 104 zu dem Näherungssensor 102 so groß, dass der Näherungssensor nicht mehr von dem Geber 104 detektiert wird und folglich nicht das Signal bereitstellt, dass der Näherungssensor 102 in der Nähe des Gebers 104 ist.

Mittels der Näherungssensoren 102 und 103 und des Gebers 104 ist folglich feststellbar, ob der Geber 104 und damit die Gondel 112 innerhalb des Korrektursektors 108 ausgerichtet ist oder nicht. Ist der Geber 104 innerhalb des Korrektursektors 108 ausgerichtet, ist auch bekannt, dass der Geber 104 beziehungsweise die Gondel 112 zumindest innerhalb vorgegebener Toleranzen in Richtung der Himmelsrichtung 113 ausgerichtet ist.

Beim Durchfahren der Ausrichtung entlang der Himmelsrichtung 113 wird der Zustand erreicht, dass beide Näherungssensoren 102 und 103 durch die Metallfahne 104 abgeschattet werden (Figur 3). Aufgrund der Schwellwerte und des daraus resultierenden Messfeldes funktioniert das Abschatten auch innerhalb von Toleranzgrenzen von beispielsweise +/- 2 % oder weniger.

Ist die Ausrichtung der Gondel 112 und des Gebers 104 außerhalb der Toleranzgrenzen, ist auch die Gondel 112 nicht entlang der Himmelsrichtung 113 ausgerichtet (Figur 4).

Die Unterscheidung, ob der Geber 104 innerhalb des Korrektursektors 108 ist oder nicht, ermöglicht eine Kontrolle der Werte des Azimutpositionsgebers 115. Detektieren beide Näherungssensoren 102 und 103 den Geber 104 (Figur 3), ist bekannt, dass der Geber 104 in die Himmelsrichtung 113 +/- der Toleranz ausgerichtet ist. Dieser Sollwert wird mit dem ermittelten Wert des Azimutpositionsgebers 115 verglichen. Stimmt der Wert des Azimutpositionsgebers 115 nicht mit dem Sollwert überein, ist der Azimutpositionsgeber 115 ungenau und kann neu mittels des Sollwerts in Abhängigkeit von der Himmelsrichtung 113 geeicht werden. Eine solche Korrektur kann kontinuierlich während des Betriebs der Windenergieanlage erfolgen, sobald eine solche Ausrichtung erreicht ist.

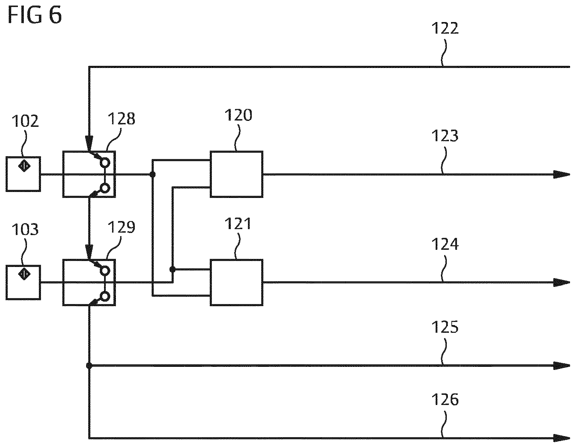

Aufgrund der Verwendung von zwei binären Näherungssensoren 102 und 103 ist eine Überprüfung der Funktionsfähigkeit der Näherungssensoren 102 und 103 möglich. Dies wird nachfolgend am Beispiel der Figur 6 erläutert.

Ein Trägersignal wird über einen Eingang 122 bereitgestellt.

Die beiden Näherungssensoren 102 und 103 sind jeweils eigensicher ausgeführt und durch eine Sensorüberwachung 128 und 129 hinsichtlich Drahtbruch und Kurzschluss überwacht. Derartige Sensorfehler führen zu einem Auslösen der Sensorüberwachung 128 und/oder 129 mit einer Meldung an die Steuervorrichtung 105 über einen Fehlerausgang 125. Die Signale der binären Näherungssensoren 102 und 103 werden jeweils auf eine sicherheitsgerichtete Auswertelogik 120 und 121 geschaltet, die drei binäre Funktionen aufweist oder aus drei binären Funktionen besteht.

Das logische UND 120 führt zu einem Ergebnis "wahr", wenn beide Sensoren keine Fehler melden und beide Signale der Näherungssensoren 102 und 103 ein "wahr" liefern, also dass der Geber 104 innerhalb der jeweiligen Messfelder der Näherungssensoren 102 und 103 ist. Folglich wird am ersten Ausgang 123 das Gesamtergebnis "wahr" ausgegeben.

Das logische XOR 121 führt zu einem Ergebnis "wahr", wenn nur einer der beiden Näherungssensoren 102 oder 103 einen Fehler meldet oder ein Falschsignal liefert. In diesem Fall ist der Geber 104 innerhalb des Messfeldes eines Näherungssensors, beispielsweise 103, und außerhalb des Messfeldes des anderen Näherungssensors, beispielsweise 102, wie beispielsweise in Figur 4 dargestellt. Damit liegt die Logik zur Detektion der Ausrichtung innerhalb des Korrektursektors 108 mit ihrer Aussage zunächst zumindest in einem nicht gesicherten Bereich, da nicht identifiziert ist, ob der Näherungssensor 102 fehlerhaft ist oder der Geber außerhalb des Messfeldes liegt. Das Gesamtergebnis am zweiten Ausgang 124 ist "wahr".

Wenn das System 101 defekt ist, wird ein dritter Ausgang 126 durch die beiden Sensorüberwachungen 128 und 129 auf den Signallevel "falsch" geschaltet. Dieses Schaltverhalten ist ein für die Überwachungseinrichtungen 128 und 129 festgelegtes Schaltverhalten.

Das Gesamtverhalten des Systems 101 kann als gesichert angesehen werden, wenn folgende Randparameter gegeben sind.

Die Sensoren 102 und 103 sind jeweils sicherheitsgerichtet beispielsweise nach einem vorgegebenen Sicherheitsintegritätslevel und/oder einem Performancelevel. Die Auswertung der Signale nach den Sensorüberwachungen 128 und 129 ist jeweils ebenfalls sicherheitsgerichtet nach beispielsweise dem Sicherheitsintegritätslevel und/oder dem Performancelevel. Die mechanische Befestigung der beiden Näherungssensoren 102 und 103 ist nach einem primären Einmess- und Einstellvorgang so gegeben, dass sich die mechanische Befestigung nicht von alleine lösen kann. Die mechanische Befestigung des Gebers 104 ist nach einem primären Einmess- und Einstellvorgang so gegeben, dass sich die mechanische Befestigung nicht von alleine lösen kann.

Im Betrieb können zumindest fünf Fälle auftreten, die von der Steuervorrichtung 105 ermittelt und ausgewertet werden können:
Beide Sensoren sind nicht defekt und liefern ein "wahr". Dann ist der Geber 104 innerhalb des Korrektursektors 108 ausgerichtet.

Beide Sensoren sind nicht defekt, nur einer liefert ein "wahr". Dann ist der Geber 104 teilweise außerhalb des Korrektursektors angeordnet, wie beispielsweise in Figur 4 dargestellt.

Ein Sensor ist defekt, der andere liefert ein "wahr".

Beide Sensoren sind nicht defekt, beide liefern ein "falsch". Dann ist der Geber 104 vollständig außerhalb des Korrektursektors 108 ausgerichtet.

Einer oder beide Näherungssensoren 102 und 103 sind defekt, beide liefern ein "falsch".

Ob einer oder beide Näherungssensoren 102 und 103 defekt sind oder bestimmungsgemäß funktionieren, wird beispielsweise wie folgt festgestellt. Es wird eine vollständige Drehung der Gondel 112 um mindestens 360° vollzogen. Dadurch wird die Himmelsrichtung 113 zumindest einmal von dem Geber 104 durchfahren. Falls während der Drehung um 360° nur einer oder keiner der Näherungssensoren 102 und 103 schaltet und den Geber 104 detektiert, sind entweder beide Näherungssensoren 102 und 103 defekt oder der eine Näherungssensor, der nicht schaltet. Die vollständige Drehung wird beispielsweise in regelmäßigen Zeitabständen von sieben Tagen oder mehr oder weniger durchgeführt. Die vollständige Drehung kann gleichzeitig mit herkömmlich durchgeführten Drehungen durchgeführt werden, wie beispielsweise einer Kabelentdrillungsfahrt.

Auch die Korrektur des Azimutpositionsgebers 115 durch den Abgleich mit dem Sollwert bei Schaltung von beiden Näherungssensoren 102 und 103 kann in regelmäßigen Abständen erfolgen während des laufenden Betriebs. Somit wird der Azimutpositionsgeber 115 regelmäßig auf die korrekte Ausrichtung eingestellt. Somit sind bei der Ausrichtung der Gondel 112 sehr geringe Toleranzen von weniger als 10°, insbesondere weniger als 2°, möglich.

Aufgrund der sehr genauen Ausrichtung der Gondel 102 können insbesondere Gesetzesauflagen verlässlich eingehalten werden, die beispielsweise den Lärmpegel oder die Abschattung über bewohnten Gebieten betreffen. Der nicht ausreichend sicher funktionierende Azimutpositionsgeber 115 wird mittels des Systems 101 erweitert und somit regelmäßig auf den korrekten Wert gesetzt. Springen des Azimutpositionsgebers 115 oder ein Auslassen von Messnocken wird somit verlässlich korrigiert. Somit wird die Azimutposition, also die Ausrichtung der Gondel 112 von der Steuervorrichtung 105 verlässlich ermittelt. Die zwei Näherungssensoren 102 und 103 sind mit der Steuervorrichtung 105 signaltechnisch verbunden. Beispielsweise weist die Steuervorrichtung 105 eine direkte Kommunikationsschnittstelle für einen GPS-Kompass auf, der sich für die Einrichtung des Systems an dieser anschließen lässt.

Gemäß Ausführungsbeispielen definiert sich der Abstand 109 der beiden Näherungssensoren 102 und 103 als Nennabstand gemäß der länglichen Ausdehnung 110 des Gebers 104, der die beiden Näherungssensoren 102 und 103 vollständig abdeckt. Beispielsweise darf in dieser Anordnung der Abstand 109 nicht kleiner sein als drei Mal der Durchmesser des jeweiligen Messfeldes der Näherungssensoren 102 und 103, um eine verlässliche Unterscheidung zwischen Abdeckung eines Näherungssensors 102, 103 oder beider Näherungssensoren 102 und 103 sowie einem Nicht-Abdecken der Näherungssensoren 102 und 103 zu ermöglichen.

Die Näherungssensoren arbeiten bei einem seitlichen Eintauchen wie dem Verdrehen der Gondel 112 mit einem Toleranzfenster. Die Toleranz ergibt sich aus der Funktionsweise der Näherungssensoren 102 und 103, da diese bereits bei zirka 80 % der Abdeckung der Sensorfläche schalten. Somit wird der Detektionsbereich um den Toleranzbereich erweitert, wie in Figur 3 dargestellt. Da zwei Näherungssensoren 102 und 103 verwendet werden, wird der Toleranzfaktor zwei Mal berücksichtigt, um den Korrektursektor 108 zu bestimmen.

Gemäß einem Ausführungsbeispiel wird auch dann ein Fehlersignal ausgegeben, dass einer der Näherungssensoren 102 und 103 defekt ist, wenn der Azimutpositionsgeber 115 die Ausrichtung in die Himmelsrichtung 113 ermittelt, jedoch nur einer der Näherungssensoren 102 und 103 den Wert "wahr" liefert. In einem solchen Fall muss bei einer kommenden Wartung beispielsweise die Windenergieanlage 100 neu vermessen und eingestellt werden. Bei einem korrekt funktionierenden System 101 und einem Austausch des Azimutpositionsgebers 115 ist es möglich, den neuen Azimutpositionsgeber 115 durch eine Referenzfahrt einzustellen, die dem Azimutpositionsgeber 115 die Himmelsrichtung 113 als Referenz zur Verfügung stellt. Folglich kann der Azimutpositionsgeber 115 ausgetauscht werden, ohne dass erneut ein GPS-Kompasssystem benötigt wird. Beim Tausch mechanischer Großkomponenten, wie Gondel, Azimutkranz und/oder Azimutantrieb, ist gegebenenfalls eine Referenzmessung mittels GPS-Kompass neu zu starten und die Näherungssensoren 102 und 103 neu einzustellen. Somit ermöglicht das System 101 eine Reduzierung der Serviceleistungen, bei denen die Ausrichtung mittels des GPS-Kompasses neu ermittelt werden muss.

Mit dem System 101 ist es möglich, die Windenergieanlage 100 so zu betreiben, dass eine möglichst genaue Auskunft über die Ausrichtung der Gondel 112 vorliegt. Somit wird in dem sogenannten Sektorbetrieb sichergestellt, dass die Windenergieanlage 100 tatsächlich nur dann in Teillast fährt oder vollständig abgeschaltet wird, wenn die Gondel 112 tatsächlich in den jeweiligen zugeordneten Sektor ausgerichtet wird. Die Ausrichtung beim Sektorbetrieb kann folglich mit kleineren Toleranzen erfolgen. Somit werden Gesetzesauflagen verlässlich eingehalten. Ein maximal vorgegebener Fehler für die Ausrichtung kann verlässlich eingehalten werden.

## Patentansprüche

1. Windenergieanlage, aufweisend:
- ein System (101), aufweisend:
- zwei binäre Näherungssensoren (102, 103), die jeweils ausgebildet sind, ein Sensorsignal mit einer ersten oder einer zweiten Information bereit zu stellen,
- einen Geber (104),
- eine Steuervorrichtung (105), wobei
- die Näherungssensoren (102, 103) und der Geber (104) berührungslos zusammenwirken,
- die Näherungssensoren (102, 103) jeweils ausgebildet sind, in Abhängigkeit von einem Abstand (107) des Gebers (104) zum jeweiligen Näherungssensor (102, 103) das Sensorsignal mit der ersten Information oder der zweiten Informationen bereit zu stellen,
- die Steuervorrichtung (105) eingerichtet ist, in Abhängigkeit von den Sensorsignalen der Näherungssensoren (102, 103) zu ermitteln, ob sich der Geber (104) innerhalb eines mittels der Näherungssensoren (102, 103) festgelegten Korrektursektors (108) befindet, wobei die Windenergieanlage weiterhin aufweist:
- eine länglich ausgedehnte Standvorrichtung (111),
- eine drehbar auf der Standvorrichtung (111) gelagerte Gondel (112), wobei der Geber (104) an einem aus der Gondel (112) und der Standvorrichtung (111) ortsfest angeordnet ist und die beiden Näherungssensoren (102, 103) an dem anderen aus der Gondel (112) und der Standvorrichtung (111) ortsfest angeordnet sind, sodass der Geber (104) und die beiden Näherungssensoren (102, 103) zusammen mit der Gondel (112) und der Standvorrichtung (111) relativ zueinander drehbar sind.

2. Windenergieanlage nach Anspruch 1, bei der die beiden Näherungssensoren (102, 103) horizontal beabstandet zueinander angeordnet sind.

3. Windenergieanlage nach einem der Ansprüche 1 oder 2, bei der der Geber (104) so länglich ausgedehnt ist, dass der Geber (104) im funktionsfähigen Zustand mindestens von dem einen Näherungssensor (102, 103) zu dem anderen Näherungssensor (102, 103) reicht.

4. Windenergieanlage nach einem der Ansprüche 1 bis 3, bei der die beiden Näherungssensoren (102, 103) jeweils einen Magnetfeldsensor aufweisen.

5. Windenergieanlage nach einem der Ansprüche 1 bis 4, bei der die beiden Näherungssensoren (102, 103) jeweils einen induktiven Sensor aufweisen.

6. Windenergieanlage nach einem der Ansprüche 1 bis 5, bei der der Geber (104) zumindest abschnittsweise magnetisch und/oder elektrisch leitfähig ist.

7. Windenergieanlage nach Anspruch 1, bei der die beiden Näherungssensoren (102, 103) innerhalb des Korrektursektors (108) an der Gondel (112) angeordnet sind.

8. Verfahren zur Montage eines Systems (101) an einer Windenergieanlage (100), das System aufweisend:
- zwei binäre Näherungssensoren (102, 103), die jeweils ausgebildet sind, ein Sensorsignal mit einer ersten oder einer zweiten Information bereit zu stellen,
- einen Geber (104),
- eine Steuervorrichtung (105), wobei
- die Näherungssensoren (102, 103) und der Geber (104) berührungslos zusammenwirken,
- die Näherungssensoren (102, 103) jeweils ausgebildet sind, in Abhängigkeit von einem Abstand (107) des Gebers (104) zum jeweiligen Näherungssensor (102, 103) das Sensorsignal mit der ersten Information oder der zweiten Informationen bereit zu stellen,
- die Steuervorrichtung (105) eingerichtet ist, in Abhängigkeit von den Sensorsignalen der Näherungssensoren (102, 103) zu ermitteln, ob sich der Geber (104) innerhalb eines mittels der Näherungssensoren (102, 103) festgelegten Korrektursektors (108) befindet, das Verfahren umfassend:
- Bereitstellen der Windenergieanlage (100) mit einer länglich ausgedehnten Standvorrichtung (111) und einer drehbar auf der Standvorrichtung (111) gelagerten Gondel (112),
- Ermitteln einer Himmelsrichtung (113) an der Gondel (112),
- Positionieren der beiden Näherungssensoren (102, 103) ortsfest an einem aus der Gondel (112) und der Standvorrichtung (111),
- Positionieren des Gebers (104) ortsfest an dem anderen aus der Gondel (112) und der Standvorrichtung (111), sodass der Geber (104) und die beiden Näherungssensoren (102, 103) zusammen mit der Gondel (112) und der Standvorrichtung (111) relativ zueinander drehbar sind,
- Festlegen des Korrektursektors (108) für die Ausrichtung des Gebers (104) in Abhängigkeit von der ermittelten Himmelsrichtung (113) und der Position der Näherungssensoren (102, 103) und des Gebers (104).

9. Verfahren nach Anspruch 8, umfassend:
- Positionieren des Gebers (104) und der beiden Näherungssensoren (102, 103) an jeweils einer der ermittelten Himmelsrichtung (113) korrespondierenden Position (114),
- Festlegen des Korrektursektors (108), sodass der Korrektursektor (108) die Himmelsrichtung (113) einschließt.

10. Verfahren nach Anspruch 8 oder 9, umfassend:
- jeweils Speichern der ermittelten Himmelsrichtung (113) und des Korrektursektors (108) in der Steuervorrichtung (105).

11. Verfahren nach einem der Ansprüche 8 bis 10:
- Ermitteln einer Abweichung der ermittelten Himmelsrichtung (113) von einer vorgegebenen absoluten Himmelsrichtung (118),
- jeweils Speichern der ermittelten Abweichung und des Korrektursektors (108) in der Steuervorrichtung (105).

12. Verfahren zum Betreiben einer Windenergieanlage (100) nach einem der Ansprüche 1 bis 7, deren System (101) mittels eines Verfahrens nach einem der Ansprüche 8 bis 11 montiert ist, umfassend:
- Ermitteln, ob sich der Geber (104) in dem Korrektursektor (108) befindet, und wenn sich der Geber (104) in dem Korrektursektor (108) befindet:
- Ermitteln eines Soll-Werts für eine Ausrichtung des Gebers (104) in Abhängigkeit von einer gespeicherten Himmelsrichtung (113),
- Ermitteln eines Werts eines Azimutpositionsgebers (115) der Windenergieanlage (100),
- Ermitteln einer Differenz zwischen dem Soll-Wert und dem ermittelten Wert, und, wenn die ermittelte Differenz größer als ein vorgegebener Toleranzwert ist,
- Ermitteln eines Korrekturwerts für den Azimutpositionsgeber (115) in Abhängigkeit von dem Soll-Wert.

13. Verfahren nach Anspruch 12, umfassend:
- Ermitteln, dass sich der Geber (104) in dem Korrektursektor (108) befindet, wenn beide Näherungssensoren (102, 103) das Sensorsignal mit der zweiten Information bereitstellen, dass der Geber (104) in der Nähe des jeweiligen Näherungssensors (102, 103) ist.

14. Verfahren nach Anspruch 12 oder 13, umfassend:
- Drehen der Gondel (112) relativ zu der Standvorrichtung (111) um mindestens 360°,
- Ausgeben eines Fehlersignals, wenn während des Drehens die beiden Näherungssensoren (102, 103) nicht jeweils mindestens einmal das Sensorsignal mit der zweiten Information bereitstellen, dass der Geber (104) in der Nähe des jeweiligen Näherungssensors (102, 103) ist.

## Claims

1. A wind turbine comprising:
- a system (101) comprising:
- two binary proximity sensors (102, 103) each being configured to provide a sensor signal having a first or a second information,
- a transmitter (104),
- a control device (105), wherein
- the proximity sensors (102, 103) and the transmitter (104) interact in a contactless manner,
- the proximity sensors (102, 103) each are configured to provide the sensor signal having the first information or the second information depending on a distance (107) from the transmitter (104) to the respective proximity sensor (102, 103),
- the control device (105) being configured to determine depending on the sensor signals of the proximity sensors (102, 103), whether the transmitter (104) is located within a correction sector (108) defined by means of the proximity sensors (102, 103), wherein the wind turbine further comprises:
- a longitudinally extended foot (111),
- a nacelle (112) mounted onto the foot (111) to be rotatable, wherein the transmitter (104) is disposed to be stationary on one of the nacelle (112) and the foot (111), and the two proximity sensors (102, 103) are disposed to be stationary on the other of the nacelle (112) and the foot (111) so that the transmitter and the two proximity sensors (102, 103) are rotatable relative to one another together with the nacelle (112) and the foot (111).

2. The wind turbine according to claim 1, in which the two proximity sensors (102, 103) are disposed to be horizontally spaced relative to each other.

3. The wind turbine according to any one of claims 1 or 2, in which the transmitter (104) is extended to be so oblong that the transmitter (104) in the functional state reaches at least from the one proximity sensor (102, 103) to the other proximity sensor (102, 103).

4. The wind turbine according to any one of claims 1 to 3, in which the two proximity sensors (102, 103) each comprise a magnetic field sensor.

5. The wind turbine according to any one of claims 1 to 4, in which the two proximity sensors (102, 103) each comprise an inductive sensor.

6. The wind turbine according to any one of claims 1 to 5, in which the transmitter (104) is magnetically and/or electrically conductive at least in sections.

7. The wind turbine according to claim 1, in which the two proximity sensors (102, 103) are disposed on the nacelle (112) within the correction sector (108).

8. A method for mounting a system (101) on a wind turbine (100), the system featuring:
- two binary proximity sensors (102, 103) each being configured to provide a sensor signal having a first or a second information,
- a transmitter (104),
- a control device (105), wherein
- the proximity sensors (102, 103) and the transmitter (104) interact in a contactless manner,
- the proximity sensors (102, 103) each are configured to provide the sensor signal having the first information or the second information depending on a distance (107) from the transmitter (104) to the respective proximity sensor (102, 103),
- the control device (105) is configured to determine depending on the sensor signals of the proximity sensors (102, 103), whether the transmitter (104) is located within a correction sector (108) defined by means of the proximity sensors (102, 103), the method comprising:
- providing the wind turbine (100) with a longitudinally extended foot (111) and a nacelle (112) mounted to be rotatable on the foot (111),
- determining a compass direction (113) on the nacelle (112),
- positioning the two proximity sensors (102, 103) to be stationary on one of the nacelle (112) and the foot (111),
- positioning the transmitter (104) to be stationary on the other of the nacelle (112) and the foot (111), so that the transmitter (102) and the two proximity sensors (102, 103) are rotatable relative to one another together with the nacelle (112) and the foot (111),
- defining the correction sector (108) for the orientation of the transmitter (104) depending on the determined compass direction (113) and the position of the proximity sensors (102, 103) and the transmitter (104).

9. The method according to claim 8, comprising:
- positioning the transmitter (104) and the two proximity sensors (102, 103) in each case on a position (114) corresponding to the determined compass direction (113),
- defining the correction sector (108) so that the correction sector (108) encloses the compass direction (113).

10. The method according to claim 8 or 9, comprising:
- respectively storing the determined compass direction (113) and the correction sector (108) in the control device (105).

11. The method according to any one of claims 8 to 10:
- determining a deviation of the determined compass direction (113) from a defined absolute compass direction (118),
- storing the determined deviation and the correction sector (102) in the control device (105).

12. A method for operating a wind turbine (100) according to any one of claims 1 to 7, the system (101) of which being mounted according to any one of claims 8 to 11, comprising:
- determining, whether the transmitter (104) is located within the correction sector (108), and if the transmitter (104) is located within the correction sector (108) :
- determining a nominal value for an orientation of the transmitter (104) depending on the stored compass direction (113),
- determining a value of a yaw position transmitter (115) of the wind turbine (100),
- determining a difference between the nominal value and the determined value, and if the determined difference is larger than a predefined tolerance value,
- determining a correction value for the yaw position transmitter (115) depending on the nominal value.

13. The method according to claim 12, comprising:
- determining that the transmitter (104) is located in the correction sector (108), if both proximity sensors (102, 103) provide the sensor signal having the second information, that the transmitter (104) is in the proximity of the respective proximity sensor (102, 103).

14. The method according to claim 12 or 13, comprising:
- rotating the nacelle (112) relative to the foot (111) by at least 360°,
- outputting an error signal, if during rotating the two proximity sensors (102, 103) do not provide in each case at least once the sensor signal having the second information that the transmitter (104) is in the proximity of the respective proximity sensor (102, 103).

## Revendications

1. Éolienne, comprenant :
- un système (101), comprenant :
- deux capteurs de proximité (102, 103) binaires qui sont constitués respectivement pour mettre à disposition un signal de capteur avec une première ou une deuxième information,
- un transmetteur (104),
- un dispositif de commande (105), sachant que
- les capteurs de proximité (102, 103) et le transmetteur (104) interagissent sans contact,
- les capteurs de proximité (102, 103) sont constitués respectivement pour mettre à disposition le signal de capteur avec la première information ou la deuxième information en fonction d'une distance (107) du transmetteur (104) par rapport au capteur de proximité (102, 103) respectif,
- le dispositif de commande (105) est configuré pour déterminer, en fonction des signaux de capteur des transmetteurs de proximité (102, 103), si le transmetteur (104) se trouve à l'intérieur d'un secteur de correction (108) défini moyennant les capteurs de proximité (102, 103), sachant que l'éolienne présente en outre :
- un bâti (111) à extension longitudinale,
- une nacelle (112) logée de manière rotative sur le bâti (111), sachant que le transmetteur (104) est disposé de manière fixe sur l'un de la nacelle (112) et du bâti (111) et les deux capteurs de proximité (102, 103) sont disposés de manière fixe sur l'autre de la nacelle (112) et du bâti (111) de telle sorte que le transmetteur (104) et les deux capteurs de proximité (102, 103) conjointement avec la nacelle (112) et le bâti (111) soient rotatifs les uns par rapport aux autres.

2. Éolienne selon la revendication 1, dans laquelle les deux capteurs de proximité (102, 103) sont disposés de manière horizontalement espacée l'un de l'autre.

3. Éolienne selon l'une des revendications 1 ou 2, dans laquelle le transmetteur (104) présente une extension oblongue de telle sorte que le transmetteur (104) porte au moins de l'un capteur de proximité (102, 103) à l'autre capteur de proximité (102, 103) à l'état fonctionnel.

4. Éolienne selon l'une des revendications 1 à 3, dans laquelle les deux capteurs de proximité (102, 103) présentent respectivement un capteur de champ magnétique.

5. Éolienne selon l'une des revendications 1 à 4, dans laquelle les deux capteurs de proximité (102, 103) présentent respectivement un capteur inductif.

6. Éolienne selon l'une des revendications 1 à 5, dans laquelle le transmetteur (104) est magnétiquement et/ou électriquement conducteur, du moins par sections.

7. Éolienne selon la revendication 1, dans laquelle les deux capteurs de proximité (102, 103) sont disposés au niveau de la nacelle à l'intérieur du secteur de correction (108).

8. Procédé de montage d'un système (101) sur une éolienne (100), le système comprenant :
- deux capteurs de proximité (102, 103) binaires qui sont constitués respectivement pour mettre à disposition un signal de capteur avec une première ou une deuxième information,
- un transmetteur (104),
- un dispositif de commande (105), sachant que
- les capteurs de proximité (102, 103) et le transmetteur (104) interagissent sans contact,
- les capteurs de proximité (102, 103) sont constitués respectivement pour mettre à disposition le signal de capteur avec la première information ou la deuxième information en fonction d'une distance (107) du transmetteur (104) par rapport au capteur de proximité (102, 103) respectif,
- le dispositif de commande (105) est configuré pour déterminer, en fonction des signaux de capteur des capteurs de proximité (102, 103), si le transmetteur (104) se trouve à l'intérieur d'un secteur de correction (108) défini moyennant les capteurs de proximité (102, 103), le procédé comprenant :
- la mise à disposition de l'éolienne (100) avec un bâti (111) à extension longitudinale et une nacelle (112) logée de manière rotative sur le bâti (111),
- la détermination d'un point cardinal (113) au niveau de la nacelle (112),
- le positionnement des deux capteurs de proximité (102, 103) de manière fixe au niveau de l'un de la nacelle (112) et du bâti (111),
- le positionnement du transmetteur (104) de manière fixe au niveau de l'autre de la nacelle (112) et du bâti (111) de telle sorte que le transmetteur (104) et les deux capteurs de proximité (102, 103) conjointement avec la nacelle (112) et le bâti (111) soient rotatifs l'un par rapport aux autres,
- la définition du secteur de correction (108) pour l'orientation du transmetteur (104) en fonction du point cardinal (113) déterminé et de la position des capteurs de proximité (102, 103) et du transmetteur (104).

9. Procédé selon la revendication 8, comprenant :
- le positionnement du transmetteur (104) et des deux capteurs de proximité (102, 103) dans une position (114) correspondant respectivement au point cardinal (113) déterminé,
- la définition du secteur de correction (108) de telle sorte que le secteur de correction (108) inclue le point cardinal (113).

10. Procédé selon la revendication 8 ou 9, comprenant :
- respectivement l'enregistrement du point cardinal (113) déterminé et du secteur de correction (108) dans le dispositif de commande (105).

11. Procédé selon l'une des revendications 8 à 10, comprenant :
- la détermination d'un écart du point cardinal (113) déterminé par rapport à un point cardinal (118) absolu spécifié,
- respectivement l'enregistrement de l'écart déterminé et du secteur de correction (108) dans le dispositif de commande (105).

12. Procédé de fonctionnement d'une éolienne (100) selon l'une des revendications 1 à 7, dont le système (101) est monté moyennant un procédé selon l'une des revendications 8 à 11, comprenant :
- le fait de déterminer si le transmetteur (104) se trouve dans le secteur de correction (108), et lorsque le transmetteur (104) se trouve dans le secteur de correction (108) :
- la détermination d'une valeur de consigne pour une orientation du transmetteur (104) en fonction d'un point cardinal (113) enregistré,
- la détermination d'une valeur d'un capteur de position azimut (115) de l'éolienne (100),
- la détermination d'une différence entre la valeur de consigne et la valeur déterminée, et, lorsque la différence déterminée est supérieure à une valeur de tolérance spécifiée,
- la détermination d'une valeur de correction pour le capteur de position azimut (115) en fonction de la valeur de consigne.

13. Procédé selon la revendication 12, comprenant :
- le fait de déterminer que le transmetteur (104) se trouve dans le secteur de correction (108) lorsque les deux capteurs de proximité (102, 103) mettent à disposition le signal de capteur avec la deuxième information selon laquelle le transmetteur (104) est à proximité du capteur de proximité (102, 103) respectif.

14. Procédé selon la revendication 12 ou 13, comprenant :
- la rotation de la nacelle (112) par rapport au bâti (111) à raison d'au moins 360°,
- l'émission d'un signal d'erreur lorsque, pendant la rotation, les deux capteurs de proximité (102, 103) ne mettent pas à disposition respectivement au moins une fois le signal de capteur avec la deuxième information selon laquelle le transmetteur (104) est à proximité du capteur de proximité (102, 103) respectif.
